(19) Europäisches Patentamt
European Patent Office
Office européen des brevets

(11) Veröffentlichungsnummer: **0 050 811**
**B1**

(12) **EUROPÄISCHE PATENTSCHRIFT**

(45) Veröffentlichungstag der Patentschrift: **13.02.85**

(21) Anmeldenummer: **81108414.4**

(22) Anmeldetag: **16.10.81**

(51) Int. Cl.[4]: **C 08 G 71/04**, C 08 G 63/42, C 08 G 63/64, C 08 G 63/66, C 08 G 63/68, C 08 G 69/18, C 08 G 69/44, C 09 D 3/72, C 09 J 3/16

# (54) Verfahren zur Herstellung anionischer Copolymerisate aus cyclischen Kohlensäureestern und Lactamen und deren Verwendung.

(30) Priorität: **29.10.80 DE 3040612**

(43) Veröffentlichungstag der Anmeldung: **05.05.82 Patentblatt 82/18**

(45) Bekanntmachung des Hinweises auf die Patenterteilung: **13.02.85 Patentblatt 85/7**

(84) Benannte Vertragsstaaten: **DE FR GB IT**

(56) Entgegenhaltungen:
**DE - A - 1 495 747**
**DE - A - 1 809 341**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Krimm, Heinrich, Dr., Heyenbaumstrasse 65, D-4150 Krefeld (DE)**
Erfinder: **Buysch, Hans-Josef, Dr., Brandenburger Strasse 28, D-4150 Krefeld (DE)**
Erfinder: **Botta, Artur, Dr., Buschstrasse 149, D-4150 Krefeld (DE)**

**EP 0 050 811 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Herstellung anionischer Copolymerisate aus Ringcarbonaten und Lactamen und deren Verwendung.

Lactame lassen sich nach bekannter Technik in Gegenwart alkalischer Katalysatoren anionisch polymerisieren. Hierbei wird der Lactamring über die Zwischenstufe eines Metallactams geöffnet und ein Linearpolymerisat mit Amidgruppen gebildet.

Ebenso ist bekannt, daß auch Ringcarbonate, z. B. Trimethylencarbonat, mit alkalischen Katalysatoren zu linearen Makromolekülen mit Carbonatgruppen polymerisiert werden können.

Wenn man deshalb ein Gemisch aus einem Lactam und einem cyclischen Carbonat mit alkalischen Katalysatoren behandelt, sollte als Reaktionsprodukt ein Polymerisationsgemisch mit Amid- und Carbonatgruppen erwartet werden, das in seinem Eigenschaftsbild im wesentlichen ein Gemisch der Homopolymerisate der Ausgangsstoffe darstellt.

Überraschenderweise wurde gefunden, daß das nicht der Fall ist. Man erhält nämlich bei der Copolymerisation äquimolarer Mengen von Lactamen und cyclischen Carbonaten mit alkalischen Katalysatoren Reaktionsprodukte mit Eigenschaften, die von den Eigenschaften der Homopolymeren nicht hergeleitet werden können. Spektroskopisch läßt sich nachweisen, daß sowohl die Amidgruppen als auch die Carbonatgruppen verschwunden sind und statt dessen die für Urethangruppen und Carbonsäureestergruppen typischen Banden auftreten. Daraus muß geschlossen werden, daß die alkalische Copolymerisation von Lactamen und Ringcarbonaten einen neuen Reaktionstyp einer alternierenden Copolymerisation nach folgendem Schema darstellt:

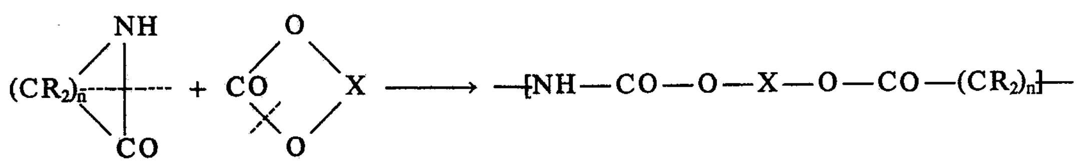

wobei R, X und n die untenstehende Bedeutung aufweisen.

Wie sehr die Eigenschaften der Homopolymerisate der Ausgangsstoffe in den neuen Copolymerisaten verändert werden, mag beispielhaft am Reaktionsprodukt aus Caprolactamen und Neopentylglykolcarbonat erläutert werden. Das Copolymerisat ist farblos, transparent, weichgummiartig bis plastisch und klebrig, während das Polyamid aus Caprolactam und das Polycarbonat aus Neopentylglykolcarbonat weiße, opake Körper mit scharfen Schmelzpunkten und großer Steifigkeit und Härte sind. Große Unterschiede bestehen auch in der Löslichkeit. Während das Polyamid nur in wenigen ausgefallenen Lösungsmitteln wie konzentrierter Schwefelsäure, Ameisensäure und Kresol löslich ist, wird das Copolymerisat aus Caprolactam und Neopentylglykolcarbonat in vielen üblichen organischen Lösungsmitteln wie Methylenchlorid, Aceton, Methanol und Essigester glatt gelöst.

Aus der DE-A 1 809 341 (Beispiel 2) ist ein hydrolytisches Polymerisationsverfahren zur Herstellung von Polyamiden mit erhöhter Viskosität bekannt. Höhere Viskosität bedeutet gemäß dieser Schrift einen erhöhten Polymerisationsgrad und damit günstige technologische Eigenschaften, wie Zähigkeit, Biegefestigkeit und Zugfestigkeit. Gemäß Beispiel 2 dieser Schrift wird Caprolactam in Gegenwart von 2 Gew.-% Ethylencarbonat, bezogen auf Summe aus Lactam und cyclischem Carbonat, in wäßrigem Medium bei erhöhter Temperatur und erhöhtem Druck unter Abdestillieren von Wasser, zunächst bei erhöhtem Druck und anschließend bei Atmosphärendruck, polymerisiert.

Im NMR-Spektrum ($^{13}C$; 90,52 MHZ in $CD_2Cl_2$) zeigt das Polymerisationsprodukt keinen Anhaltspunkt für in die Polymerkette eingebauten Urethangruppen (—NH—CO—O—), die bei einer Copolymerisation des Caprolactams mit dem Ethylencarbonat vorhanden sein müßten. Offensichtlich führt das hydrolytische Polymerisationsverfahren von Lactamen und Alkylenglykolcarbonaten in wäßrigem Medium gemäß DE-A 1 809 341 (Beispiel 2) zu Polyamiden, die keine Urethangruppen enthalten. Unter Berücksichtigung dieses Sachverhaltes war es überraschend, daß das erfindungsgemäße Verfahren der anionischen Copolymerisation von Lactamen und cyclischen Kohlensäureestern (Alkylenglykolcarbonaten) in wasserfreiem Medium in Gegenwart von alkalischen Katalysatoren zu Urethan- und Carbonsäureestergruppen enthaltenden Copolymerisaten mit wertvollen Eigenschaften führt.

Gegenstand der Erfindung ist also ein Verfahren zur Herstellung anionischer Copolymerisate aus Lactamen und cyclischen Kohlensäureestern mit Urethan- und Carbonsäureestergruppen, dadurch gekennzeichnet, daß man wasserfreie Gemische von Lactamen und cyclischen Kohlensäureestern in Gegenwart alkalischer Katalysatoren erhitzt sowie ihre Verwendung als Kunststoffe, Klebstoffe, Weichmachern und Lackbindemittel.

Geeignete Lactame entsprechen der Formel ,

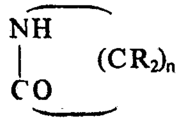

worin

R Wasserstoff oder $C_1-C_4$-Alkyl und
n eine ganze Zahl von 2 bis 13

bedeuten, insbesondere 4,4-Dimethyl-acetidinon-(2), 2-Pyrrolidon, 2-Piperidon, ε-Caprolactam, 4-tert.-Butylcaprolactam, Capryllactam und Laurinlactam und ganz besonders bevorzugt ε-Caprolactam, Laurinlactam und 2-Pyrrolidon.

Die geeigneten cyclischen Kohlensäureester werden aus der folgenden Gruppe gewählt: Trimethylencarbonat, Neopentylglykolcarbonat, 1,3-Butandiolcarbonat, Octamethylencarbonat, Decamethylencarbonat, Dodecamethylencarbonat, Triethylenglykolcarbonat, ferner die dimeren Carbonate des Hexandiols-(1,6), des Pentandiols-(1,5), des Decandiols-(1,10), des Diethylenglykols, des Triethylenglykols, das trimere Carbonat des Diethylenglykols sowie die bicyclischen Carbonate des Trimethylolpropans, des Pentaerythrits und des Dimethylolpropans.

Die Copolymerisationskomponenten können in beliebigem Mengenverhältnis eingesetzt werden, da die über das stöchiometrische Verhältnis überschüssige Komponente selbst polymerisationsfähig ist. Es ist so leicht möglich, die Produkteigenschaften in weiten Grenzen zu variieren, indem in Abhängigkeit vom Überschuß am einen oder anderen Bestandteil die Produkteigenschaften sich mehr dem Eigenschaftsbild des jeweiligen Homopolymerisats annähern lassen.

Insbesondere werden Mischungen copolymerisiert, die aus 10—90 Gewichtsprozent Lactam und 90—10 Gewichtsprozent cyclischem Carbonat bestehen, vorzugsweise aus 20—80 Gewichtsprozent Lactam und 80—20 Gewichtsprozent cyclischem Carbonat.

In Abhängigkeit vom Mengenverhältnis der Reaktionspartner können die Copolymerisate zusätzlich Carbonamid- und Carbonatgruppen aufweisen, die spektroskopisch nachweisbar sind.

Im allgemeinen wird die Reaktion in der Schmelze der Reaktionspartner durchgeführt; es kann aber auch in Lösung polymerisiert werden, wobei als Lösungsmittel aprotische Lösungsmittel in Frage kommen wie aromatische Kohlenwasserstoffe, Ether, Dimethylacetamid, Dimethylsulfoxid.

Die Copolymerisate weisen Molekulargewichte von etwa 1000 bis etwa 150 000, insbesondere 5000 bis 75 000 und vorzugsweise 8000 bis 40 000 auf. Alle Molekulargewichte sind durch Lichtstreuung bestimmte Gewichtsmittel.

Für das Verfahren geeignete Katalysatoren sind z. B. Alkali-Verbindungen wie Lithium-, Natrium-, Kaliummetalle, -oxide, -hydroxide, -carbonate, -alkoholate, -lactamate und die Alkalisalze schwacher Säuren wie der Blausäure und von Carbonsäuren.

Die Katalysatoren werden zweckmäßig in Mengen von 0,001—1 Gewichtsprozent, vorzugsweise von 0,01—0,2 Gewichtsprozent, bezogen auf die Monomerenmenge, eingesetzt.

Eine im Interesse einer guten Verteilung des Katalysators bevorzugte Anwendungsweise besteht darin, den Katalysator in Form von Alkalimetall in einem Teil des Lactams zu lösen und die homogene Lactamatlösung zur Schmelze der übrigen Komponenten zuzugeben.

Die Polymerisationstemperaturen liegen bei 100—250° C, vorzugsweise bei 120—180° C.

Die neuen Copolymeren können in vielfacher Weise technisch genutzt werden. Sie dienen als in weiten Grenzen modifizierbare Kunststoffe, Klebstoffe, Weichmacher und Lacke.

### Beispiel 1

11,3 g (0,1 Mol) trockenes Caprolactam, 13 g (0,1 Mol) trockenes Neopentylglykolcarbonat und 10 mg Natrium, gelöst in etwa 1 g des eingesetzten Caprolactams, werden unter Stickstoff 2 Stunden bei 150° C gehalten. Nach Abkühlen erhält man 14,3 g eines hochmolekularen, farblosen, klebrigen, weichgummiartigen, plastischen Polymeren, das sich in Methanol, Methylenchlorid, Aceton und Essigester klar löst und ein Molekulargewicht von 12 000 besitzt.

Nach dem Befund der NMR- und IR-Untersuchung sind die Carbonatgruppen ganz und die Amidgruppen weitgehend verschwunden. Statt dessen sind überwiegend Carbonsäureestergruppen und Urethangruppen in etwa gleicher Menge vorhanden.

### Beispiel 2

22,6 g (0,2 Mol) Caprolactam, 6,5 g (0,05 Mol) Neopentylglykolcarbonat und 15 mg Natrium werden wie in Beispiel 1 eine Stunde bei 130° C gehalten. Schon nach etwa 5 Minuten wird die Schmelze dickflüssig. Man hält noch 2 h bei 160° C. Das Reaktionsprodukt (29,1 g) ist nach Abkühlen hochmolekular, weißlich opak, zäh und hart. Es löst sich in heißem Methanol und Dimethylformamid klar und fällt beim Abkühlen als Gel aus. Es ist unlöslich in Methylenchlorid. Das Molekulargewicht beträgt etwa 19 000. IR- und NMR-Spektrum zeigen Carbonamid, Carbonsäureester und Urethangruppen, jedoch keine Carbonatgruppen.

Beispiel 3

26 g (0,2 Mol) Neopentylglykolcarbonat, 1,1 g (0,01 Mol) Caprolactam, worin 10 mg Natrium gelöst sind, werden auf 125°C erhitzt. Nach 10 Minuten steigt die Temperatur plötzlich auf 140°C und es tritt Polymerisation ein. Man hält noch 1 h bei 130°C. Das Reaktionsprodukt (27,1 g) ist nach Abkühlen hochmolekular, weiß, opak, hart und steif. Es ist unlöslich in Methanol und löst sich klar in Methylenchlorid.

Das Molekulargewicht beträgt etwa 23 000.

Beispiel 4

11,3 g (0,1 Mol) Caprolactam, 14,4 g (0,05 Mol) Bis-hexamethylendicarbonat und 10 mg Natrium werden wie in Beispiel 1 6 h bei 160°C gehalten, währenddessen das Gemisch zunehmend dickflüssiger wird. Man erhält nach Erkalten ein hochmolekulares, farbloses, schwach opakes, zähes Reaktionsprodukt (25,7 g). Es ist klar löslich in Methylenchlorid und Benzol und quillt in Essigester und Methanol. Aus Methylenchloridlösung läßt sich ein auf Glas festhaftender Film gießen, der sich mit Hilfe von Wasser abziehen läßt. Der Film läßt sich verstrecken und hat dann eine erhebliche Zugfestigkeit. Wird er zwischen Glasplatten bei 100°C gehalten, so ergibt sich eine in der Kälte festhaftende Verklebung.

Das Copolymerisat hat ein Molekulargewicht von etwa 28 000.

Beispiel 5

Zu einer Schmelze von 20 g Neopentylglykolcarbonat und 2 g Ditrimethylolpropan-dicarbonat gibt man 2 g Caprolactam, worin 10 mg Natrium gelöst sind. Sofort tritt Polymerisation unter Vernetzung ein. Man hält noch 2 h bei 160°C. Das Reaktionsprodukt (22 g) ist unschmelzbar und unlöslich in Lösungsmitteln. Es ist farblos, transparent, zäh und von großer Bruchfestigkeit.

Beispiel 6

20 g Neopentylglykolcarbonat, 2 g 3,3-Oxetan-spirodimethylencarbonat und 2 g Caprolactam, worin 15 mg Natrium gelöst sind, werden 2 h bei 190°C gehalten. Man erhält ein bei Raumtemperatur gummiartiges, schwach vernetztes Reaktionsprodukt (24 g).

Beispiel 7

Zu einer Schmelze von 17,5 g (0,155 Mol) Caprolactam, 7,8 g (0,06 Mol) Neopentylglykolcarbonat gibt man 10 mg Kalium und hält 2 h bei 160°C. Man erhält ein farbloses, gummiartig elastisches, transparentes Reaktionsprodukt (25,3 g). Das Molekulargewicht beträgt 18 000.

Beispiel 8

11,3 g (0,1 Mol) Caprolactam, 13,2 g (0,05 Mol) Bisdiethylenglykol-dicarbonat und 10 mg Natrium, in 1 g des Caprolactams gelöst, werden 6 h bei 160°C gehalten. Das Reaktionsprodukt (24,5 g) ist hochmolekular, farblos, transparent, weichgummiartig und plastisch. Das Molekulargewicht beträgt 9000.

Beispiel 9

11,3 g (0,1 Mol) Caprolactam, 17,6 g (0,05 Mol) Bistriethylenglykol-dicarbonat und 15 mg Natrium, in einem Teil des Caprolactams gelöst, werden zwei Stunden bei 160°C gehalten. Das Reaktionsprodukt (28,9 g) ist hochmolekular, farblos, transparent, weichgummiartig und plastisch. Das Molekulargewicht beträgt 10 500.

Beispiel 10

16,9 g (0,1 Mol) 4-tert.-Butyl-caprolactam, 13 g (0,1 Mol) Neopentylglykolcarbonat und 10 mg Natrium werden 4 Stunden bei 150°C gehalten. Das Reaktionsprodukt (29,9 g) ist hochmolekular, farblos, transparent und plastisch. Das Molekulargewicht beträgt 7800.

Beispiel 11

19,7 g (0,1 Mol) Laurinlactam, 13 g (0,1 Mol) Neopentylglykolcarbonat und 10 mg Natrium, in einem Teil des Laurinlactams gelöst, werden 6 h bei 150°C gehalten. Man erhält ein hochmolekulares, opakes, zähes Reaktionsprodukt (32,7 g). Das Molekulargewicht beträgt 18 000.

**Patentansprüche**

1. Verfahren zur Herstellung anionischer Copolymerisate mit durchschnittlichen Molekulargewichten von etwa 1000 bis 150 000, bestimmt durch Lichtstreuung, mit Urethan- und Carbonsäureestergruppen und gegebenenfalls Carbonat- oder Carbonamidgruppen, dadurch gekennzeichnet, daß man wasserfreie Gemische aus Lactamen der Formel

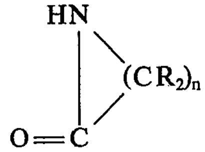

worin

R Wasserstoff oder $C_1-C_4$-Alkyl und
n eine ganze Zahl von 2 bis 13 bedeuten,

und cyclischen Kohlensäureestern aus der Gruppe Trimethylencarbonat, Neopentylglykolcarbonat, 1,3-Butandiolcarbonat, Octamethylencarbonat, Decamethylencarbonat, Dodecamethylencarbonat, Triethylenglykolcarbonat, dimere Carbonate des Hexandiols-(1,6), des Pentandiols-(1,5), des Decandiols-(1,10), des Diethylenglykols und des Triethylenglykols, trimeres Carbonat des Diethylenglykols, sowie bicyclische Carbonate des Trimethylolpropans, des Pentaerythrits und des Dimethylolpropans, gegebenenfalls in einem aprotischen Lösungsmittel, bei 100 bis 250° C, vorzugsweise bei 120 bis 180° C, in Gegenwart von 0,001 bis 1 Gew.-%, bezogen auf die Monomermenge, alkalischer Katalysatoren polymerisiert.

2. Verfahren nach Anspruch 1, dadurch gekennzeichnet, daß man Lactame und cyclische Kohlensäureester im Verhältnis von 10 : 90 bis 90 : 10 Gew.-%, vorzugsweise 20 : 80 bis 80 : 20 Gew.-%, einsetzt.

3. Verwendung der anionischen Polymerisate nach Anspruch 1 als Kunststoffe, Klebstoffe, Weichmacher und Lacke.

**Claims**

1. A process for the production of anionic copolymers having average molecular weights, as determined by light scattering, of from about 1000 to 150 000 and containing urethane and carboxylic acid ester groups and, optionally, carbonate or carbonamide groups, characterized in that anhydrous mixtures of lactams corresponding to the following formula

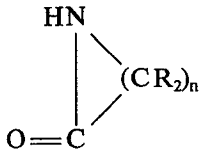

wherein

R represents hydrogen or $C_1-C_4$-alkyl and
n is an integer of from 2 to 13,

and cyclic carbonic acid esters from the group comprising trimethylene carbonate, neopentyl glycol carbonate, 1,3-butane diol carbonate, octamethylene carbonate, decamethylene carbonate, dodecamethylene carbonate, triethylene glycol carbonate, dimeric carbonates of 1,6-hexane diol, 1,5-pentane diol, 1,10-decane diol, diethylene glycol and triethylene glycol, the trimeric carbonate of diethylene glycol and bicyclic carbonates of trimethylol propane, pentaerythritol and dimethylol propane, are polymerized, optionally in an aprotic solvent, at 100 to 250°C and preferably at 120 to 180°C in the presence of from 0.001 to 1% by weight, based on the quantity of monomer, of alkaline catalysts.

2. A process as claimed in Claim 1, characterized in that lactams and cyclic carbonic acid esters are used in a ratio of from 10 : 90 to 90 : 10% by weight and preferably in a ratio of from 20 : 80 to 80 : 20% by weight.

3. The use of the anionic polymers claimed in Claim 1 as plastics, adhesives, plasticizers and lacquers.

**Revendications**

1. Procédé de production de copolymères anioniques ayant des poids moléculaires moyens d'environ 1000 à 150 000, déterminés par diffusion de la lumière, avec des groupes uréthanne et ester d'acide carboxylique et, le cas échéant, des groupes carbonate ou carboxamide, caractérisé en ce qu'on polymérise des mélanges anhydres de lactames de formule

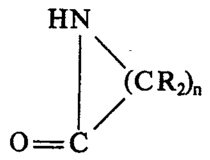

dans laquelle

R  est l'hydrogène ou un groupe alkyle en $C_1$ à $C_4$ et
n  est un nombre entier de 2 à 13,

et des esters cycliques d'acide carbonique du groupe comprenant le carbonate de triméthylène, le carbonate de néopentylglycol, le carbonate de 1,3-butanediol, le carbonate d'octaméthylène, le carbonate de décaméthylène, le carbonate de dodécaméthylène, le carbonate de triéthylène-glycol, des carbonates dimères de l'hexanediol-(1,6), du pentanediol-(1,5), du décanediol-(1,10), du diéthylène-glykol et du triéthylène-glycol, un carbonate trimère du diéthylène-glycol ainsi que des carbonates bicycliques du triméthylolpropane, du pentaérythritol et du diméthylolpropane, éventuellement dans un solvant aprotique, à 100—250° C, de préférence à 120—180° C, en présence de 0,001 à 1% en poids, par rapport à la quantité de monomères, de catalyseurs alcalins.

2. Procédé suivant la revendication 1, caractérisé en ce qu'on utilise des lactames et des esters cycliques d'acide carbonique dans le rapport de 10 : 90 à 90 : 10% en poids, de préférence de 20 : 80 à 80 : 20% en poids.

3. Utilisation des polymères anioniques suivant la revendication 1 comme matières plastiques, adhésifs, plastifiants et laques.